# FASCICULE DE BREVET EUROPEEN

(11) **EP 1 477 797 B1**
(45) Date de publication et mention de la délivrance du brevet: **26.11.2014**
(21) Numéro de dépôt: 04356059.8
(22) Date de dépôt: 29.04.2004
(51) Int. Cl.: G01N 25/72, G01N 21/90

(54) **Procédé et dispositif pour l'inspection à chaud d'objets creux translucides ou transparents**
Verfahren und Vorrichtung zur Hitzekontrolle von transparenten oder durchscheinenden Hohlkörpern
Method and apparatus for heat inspection of transparent or translucent hollow objects

(30) Priorité: 30.04.2003 FR 0305320
(43) Date de publication de la demande: 17.11.2004
(73) Titulaire: Tiama, 69700 Montagny (FR)
(72) Inventeur: Bathelet, Guillaume, 69003 Lyon (FR); Gerard, Marc, 69700 Givors (FR)
(74) Mandataire: Thibault, Jean-Marc

(56) Documents cités:
- EP-A- 0 679 883
- DE-A- 10 030 649
- DE-A- 19 838 858
- DE-A- 19 902 316
- US-A- 3 356 212
- US-A- 6 089 108
- US-A- 6 151 064
- PATENT ABSTRACTS OF JAPAN vol. 1999, no. 10, 31 août 1999 (1999-08-31) & JP 11 136440 A (ASAHI OPTICAL CO LTD), 21 mai 1999 (1999-05-21)

## Description

La présente invention concerne le domaine technique de l'inspection d'articles ou d'objets creux, translucides ou transparents présentant une haute température.

L'objet de l'invention vise plus précisément l'inspection à haute cadence d'objets tels que des bouteilles ou des flacons en verre sortant d'une machine de fabrication ou de formage.

Dans le domaine préféré de la fabrication d'objets en verre, il est connu d'utiliser le rayonnement infrarouge émis par les objets en sortie de la machine de formage afin de réaliser un contrôle ou une inspection en vue de déceler d'éventuels défauts sur la surface ou à l'intérieur des objets. Le contrôle de la qualité de tels objets est nécessaire afin d'éliminer ceux qui présentent des défauts susceptibles d'affecter leur caractère esthétique ou plus grave, de constituer un réel danger pour l'utilisateur ultérieur.

D'une manière classique, la machine de formage est constituée de différentes cavités équipées chacune d'un moule dans lequel l'objet prend sa forme finale à haute température. En sortie de la machine de formage, les objets sont acheminés de manière à constituer une file sur un convoyeur de transport amenant les objets à défiler successivement dans divers postes de traitement tels que de pulvérisation et de recuit.

Il apparaît intéressant d'identifier un défaut de formage le plus tôt possible à la sortie de la machine de formage avant les divers postes de traitement de manière à pouvoir le corriger le plutôt possible au niveau de la machine de formage. Dans l'état de la technique, diverses solutions ont été proposées pour inspecter des objets à haute température sortant d'une machine de formage.

Par exemple, le brevet GB 9 408 446 décrit un appareil constitué de deux capteurs infrarouges disposés de part et d'autre du convoyeur acheminant les objets en sortie de la machine de formage. Ces capteurs génèrent chacun un signal en réponse aux radiations de chaleur émise par les objets. Si un tel signal ne correspond pas à un modèle prédéterminé, les objets sont considérés comme défectueux. Il est à noter que ce principe de détection consiste à mémoriser pour chaque cavité, l'image d'un objet considéré comme bon de manière à servir de modèle de référence.

Un tel appareil ne donne pas satisfaction en pratique pour des raisons qui sont mises en évidence, en particulier dans le document DE 199 02 316. En effet, il est à noter que les distances de convoyage des objets entre les différentes cavités et le capteur utilisé pour l'inspection sont très différentes. Or, les objets refroidissent très vite de sorte que le rayonnement infrarouge de chaque objet est très différent au moment du passage devant le capteur. Dans le document DE 199 02 316, il est précisé que les rayonnements infrarouges des objets peuvent varier dans un rapport de 1 à 10 en fonction de la cavité d'origine des objets à leur passage devant le capteur.

Pour tenter d'apporter une réponse à ce problème, le document DE 199 02 316 propose d'analyser le profil thermique des objets récupérés par le capteur infrarouge en vue de déterminer statistiquement pour chaque cavité, un profil thermique escompté qui est comparé au profil thermique mesuré en vue de détecter l'état de défaillance ou non des objets.

La technique décrite par ce document nécessite une analyse statistique de plusieurs profils thermiques entraînant indubitablement une approximation affectant la qualité de détection. De plus, un tel procédé empêche d'effectuer une comparaison directe entre les objets issus des différentes cavités. Enfin, cette technique prend en compte des signaux de mesure susceptibles d'être saturés, ce qui nuit à la qualité de détection.

Dans le même sens, le document DE 100 30 649 décrit un procédé et un dispositif pour inspecter des objets en verre en sortie d'une machine de fabrication en tenant compte du refroidissement que subissent les objets en sortie de la machine de fabrication. Ce document prévoit de déterminer un modèle de référence de refroidissement pour les objets et de le comparer au signal de mesure afin de détecter un objet défectueux.

Le brevet US 3 356 213 décrit un dispositif et un procédé pour déterminer l'épaisseur d'un objet creux en sortie d'une machine de fabrication, à partir de l'analyse du signal de sortie d'un capteur infrarouge.

Dans l'état de la technique, il est aussi connu de régler le capteur afin que le signal de mesure ne se trouve jamais saturé quelle que soit la cavité d'origine de l'objet. Cependant, dans la mesure où le niveau du rayonnement infrarouge varie dans des proportions importantes en fonction de la cavité d'origine, le niveau du signal délivré par le capteur est très différent d'une cavité à l'autre. Ainsi, le niveau du signal de mesure est très faible pour les objets provenant des cavités les plus éloignées du capteur de mesure. Dans ce cas, le rapport signal sur bruit est mauvais, ce qui limite les possibilités de détection des défauts et nuit ainsi à la qualité de détection des défauts. Par ailleurs, cette technique comme les autres techniques connues nécessite d'utiliser a posteriori à l'acquisition du signal de mesure, un moyen de correction (tel qu'un modèle de référence (GB 9 408 446) ou une analyse statistique (DE 199 02 316)) présentant un caractère d'approximation préjudiciable à la qualité de détection.

L'objet de l'invention vise donc à remédier aux inconvénients énoncés ci-dessus en proposant un procédé permettant d'optimiser la réponse du capteur quelle que soit la provenance des objets des cavités de formage.

Pour atteindre un tel objectif, le procédé pour inspecter, à l'aide d'au moins un capteur sensible au rayonnement infrarouge, des objets creux transparents ou translucides à haute température sortant de différentes cavités de formage comporte une étape d'évaluation, pour chaque cavité de formage, du niveau de rayonnement infrarouge émis par les objets, que en sont issus, suivie d'une étape d'inspection des objets. L'étape d'évaluation du rayonnement infrarouge émis par les objets permet de déterminer pour chaque cavité de formage, une exposition du capteur. Lors de l'étape d'inspection, l'exposition du capteur est adapté à l'exposition déterminée pour chaque objet, en fonction de la cavité d'origine de l'objet, de manière à uniformiser la réponse du capteur quelle que soit la cavité d'origine des objets.

L'objet de l'invention vise donc à agir directement sur le capteur afin d'optimiser sa réponse pour obtenir le meilleur rapport signal sur bruit quelle que soit l'origine de la cavité de l'objet qui passe devant le capteur. Il s'ensuit qu'il n'est pas nécessaire d'utiliser un moyen de correction de la réponse du capteur en fonction de la cavité d'origine. Par ailleurs, les signaux délivrés par le capteur présentent des niveaux identiques permettant une comparaison directe.

De manière préférée, le procédé consiste à adapter l'exposition du capteur de manière que le capteur pour l'inspection des objets, délivre des signaux de sortie présentant une amplitude maximum non saturée.

Selon une variante de réalisation, le procédé consiste à évaluer le niveau du rayonnement infrarouge par un détecteur autre que le capteur.

Selon une autre variante préférée de réalisation, le procédé selon l'invention consiste :
- à évaluer le niveau du rayonnement infrarouge par le capteur lors d'une phase d'étalonnage au cours de laquelle cette évaluation est synchronisée avec l'origine de formation des objets dans les cavités,
- et à adapter, pour l'inspection des objets par le capteur, l'exposition du capteur en fonction de l'évaluation du niveau du rayonnement infrarouge préalablement effectuée au cours de la phase d'étalonnage, cette correction étant synchronisée avec l'origine de formation des objets dans les cavités.

Selon un avantage de cette variante préférée de réalisation, lors de la phase d'étalonnage, l'évaluation du niveau rayonnement infrarouge des objets est réalisée pour des objets servant de référence correspondant à au moins le premier cycle de formation des objets sortant des cavités de formage.

Selon un autre avantage de cette variante préférée de réalisation, le procédé consiste à évaluer le niveau du rayonnement infrarouge lors d'une phase d'étalonnage réalisée lors de l'étape d'inspection d'une série d'objets.

Avantageusement, le procédé consiste à adapter l'exposition du capteur en réglant son temps d'intégration.

Selon d'autres variantes de réalisation, le procédé consiste à adapter l'exposition du capteur en réglant le temps d'exposition du capteur, le niveau de rayonnement acquis par le capteur ou le gain des signaux délivrés par le capteur.

Un autre objet de l'invention est de proposer une installation pour inspecter à haute température des objets creux transparents ou translucides sortant de différentes cavités de formage. Cette installation comporte :
- au moins un capteur sensible au rayonnement infrarouge émis par les objets défilant devant le capteur,
- et une unité de contrôle et de traitement des signaux de sortie délivrés par le capteur.

Conformément à l'invention, cette installation comporte :
- des moyens d'évaluation du niveau du rayonnement infrarouge au moins partiel des objets préalablement à leur inspection par le capteur,
- et des moyens d'adaptation de l'exposition du capteur en fonction de l'évaluation du niveau du rayonnement infrarouge en vue d'uniformiser la réponse du capteur lors de l'inspection des objets, quelle que soit la provenance des objets issus des différentes cavités.

Selon une variante de réalisation, l'installation comporte un détecteur du rayonnement infrarouge situé en amont du capteur en considération du sens de défilement des objets et relié à l'unité de contrôle et de traitement.

Selon une variante préférée de réalisation, les moyens d'évaluation du niveau du rayonnement infrarouge des objets sont réalisés à l'aide du ou des capteur(s).

Avantageusement, les moyens d'adaptation de l'exposition du capteur assurent au capteur, de délivrer des signaux de sortie présentant une amplitude maximum non saturée.

Selon une variante préférée de réalisation, l'installation comporte en tant que moyens d'adaptation de l'exposition du capteur, des moyens de réglage du temps d'intégration du capteur.

Selon une caractéristique préférée de réalisation, l'installation comporte des moyens de synchronisation entre l'unité de contrôle du capteur et la machine de formage en vue de synchroniser la correction de l'exposition du capteur devant lequel défilent les objets en fonction de l'origine de formation desdits objets dans les cavités.

Conformément à une variante préférée de réalisation, l'installation comporte au moins deux capteurs sensibles au rayonnement infrarouge disposés de part et d'autre d'un convoyeur de déplacement assurant le défilement des objets devant les capteurs, chaque capteur étant incliné, par rapport à la normale à la direction de défilement, d'un angle d'inclinaison inférieur ou égal à 45° et de préférence de l'ordre de 30°.

Selon une caractéristique préférée de réalisation, l'installation comporte pour chaque capteur, une plaque opaque au rayonnement infrarouge disposée de manière que l'objet se trouve situé entre ladite plaque et le champ de vision du capteur en vue d'éviter la prise d'éclairages parasites par le capteur.

Diverses autres caractéristiques ressortent de la description faite ci-dessous en référence aux dessins annexés qui montrent, à titre d'exemples non limitatifs, des formes de réalisation de l'objet de l'invention.

La **Figure 1** est une vue schématique illustrant un exemple préféré de réalisation d'une installation d'inspection conforme à l'invention.

Les **Figures 2a** et **2b** illustrent la forme de signaux de sortie d'un capteur ne mettant pas en oeuvre le principe de l'invention, pour deux cavités éloignées entre elles.

Les **Figures 3a** et **3b** illustrent la forme des signaux de sortie d'un capteur mettant en oeuvre le principe conforme à l'invention, pour deux cavités éloignées entre elles.

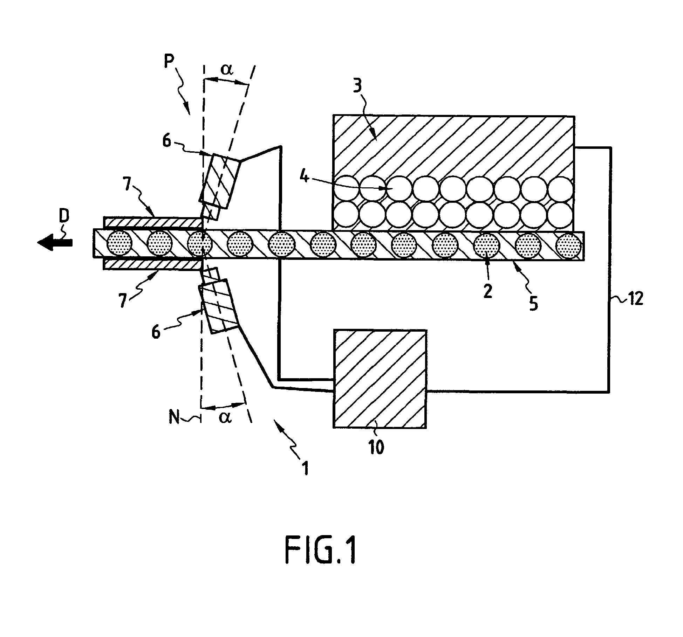

Tel que cela ressort plus précisément de la **Figure 1**, l'objet de l'invention concerne, dans un mode de réalisation préféré de l'invention, une installation **1** permettant d'inspecter à chaud des objets creux transparents ou translucides **2** tels que par exemple des bouteilles ou des flacons en verre. L'installation **1** est placée de manière à permettre d'inspecter les objets **2** sortant d'une machine de fabrication ou de formage **3** et présentant ainsi une haute température.

La machine de formage **3** comporte de manière classique une série de cavités **4** assurant chacune le formage d'un objet **2**. De manière connue, les objets **2** qui viennent d'être formés par la machine **3** sont acheminés sur un convoyeur de sortie **5** de manière que les objets **2** constituent une file sur le convoyeur **5**. Les objets **2** sont ainsi acheminés successivement à différents postes de traitement.

Selon un mode de réalisation préféré de l'invention, l'installation **1** comporte un poste d'inspection ou de contrôle **P** à haute cadence, des objets **2** présentant une haute température. A cet effet, le poste d'inspection **P** est placé au plus près de la machine de formage de sorte que le convoyeur **5** assure le défilement successif des objets **2** à haute température devant le poste d'inspection **P** qui permet ainsi de contrôler en ligne l'état défectueux ou non des objets **2**. Le poste d'inspection **P** comporte au moins un et dans l'exemple illustré, deux capteurs **6** sensibles au rayonnement infrarouge émis par les objets **2** défilant devant chaque capteur. Les capteurs **6** sont placés ainsi en sortie de la machine de formage **3** de manière à être sensibles aux radiations de chaleur émises par les objets **2**. Dans l'exemple illustré, les deux capteurs **6** sont disposés de part et d'autre du convoyeur **5** pour permettre d'inspecter les deux côtés des objets **2**. Par exemple, chaque capteur **6** est constitué par une caméra infrarouge de type linéaire.

Selon une caractéristique préférée de réalisation, chaque capteur **6** est incliné par rapport à la normale **N** à la direction de défilement **D,** d'un angle d'inclinaison α inférieur ou égal à 45° et de préférence de l'ordre de 30°. Il est à noter que chaque capteur est dirigé de manière à observer un objet **2** en aval par rapport au sens de défilement **D** des objets. Les deux capteurs **6** s'étendent donc de manière symétrique de part et d'autre du convoyeur **5**.

Selon une autre caractéristique préférée de réalisation, l'installation comporte pour chaque capteur **6**, une plaque opaque au rayonnement infrarouge **7** disposée de manière que l'objet **2** se trouve situé entre ladite plaque **7** et le champ de vision du capteur **6**. Une telle plaque opaque **7** permet d'éviter la prise de rayonnements lumineux parasites par le capteur **6**.

D'une manière classique, les capteurs **6** sont reliés à une unité **10** de contrôle et de traitement des signaux de sortie délivrés par les capteurs **6**. En effet, chaque capteur **6** génère chacun un signal de sortie, par exemple vidéo, en réponse au rayonnement infrarouge émis par un objet **2**. Bien entendu, l'unité **10** est adaptée pour piloter le fonctionnement des capteurs **6** au passage d'un objet **2** dans leur champ de vision, de manière que chaque capteur **6** prenne une image de chacun des objets **2** défilant à haute cadence. Les images prises par le ou les capteur(s) **6** sont analysées par l'unité **10** lors d'une étape d'inspection, pour rechercher d'éventuels défauts des objets **2**.

Conformément à l'invention, l'installation **1** comporte des moyens permettant d'évaluer le niveau ou l'intensité du rayonnement infrarouge, au moins partiel, des objets **2** préalablement à leur inspection par le ou les capteurs **6**. De tels moyens d'évaluation peuvent être mis en oeuvre par un détecteur de rayonnement infrarouge différent du ou des capteurs, placés en amont du poste d'inspection **P** en considération du sens de déplacement des objets **2**. Selon cet exemple, un tel détecteur est relié à l'unité de contrôle et de traitement **10**.

Selon une variante préférée de réalisation qui apparaîtra plus précisément dans la suite de la description, de tels moyens d'évaluation sont réalisés, à l'aide du ou des capteurs **6** lors d'une phase d'étalonnage au cours de laquelle le rayonnement infrarouge des objets **2** provenant de chacune des cavités **4** est enregistré. Ainsi, ces moyens évaluent l'amplitude du signal de sortie dans les images acquises par le ou les capteurs **6**, pour les objets issus des différentes cavités **4**. Par exemple, cette évaluation du niveau du rayonnement infrarouge est réalisée sur une partie prédéterminée de l'image prise.

Il est à noter que l'installation **1** comporte des moyens de synchronisation **12** entre l'unité de contrôle **10** et la machine de formage **3** de manière que pour chaque objet **2** passant au poste de détection **P**, il peut être connu la cavité d'où l'objet provient. Ainsi, la mesure du rayonnement infrarouge partiel ou complet des objets **2** est synchronisée avec la machine de formage **3**. En d'autres termes, pour chaque cavité **4**, il est évalué le niveau du rayonnement infrarouge de l'objet **2** issu de ces cavités **4**.

Conformément à l'invention, l'installation **1** comporte également, des moyens permettant d'adapter l'exposition du ou des capteurs **6** en fonction de l'évaluation du niveau du rayonnement infrarouge préalablement effectué, en vue d'uniformiser la réponse du ou des capteurs lors de l'inspection des objets, quelle que soit la provenance des objets issus des différentes cavités. En effet, il doit être considéré que les distances de convoyage entre les cavités **4** et le poste d'inspection **P** sont très différentes. Or, comme les objets **2** refroidissent très vite, les niveaux des rayonnements infrarouges de chaque objet sont très différents au moment de leur passage au poste d'inspection **P**.

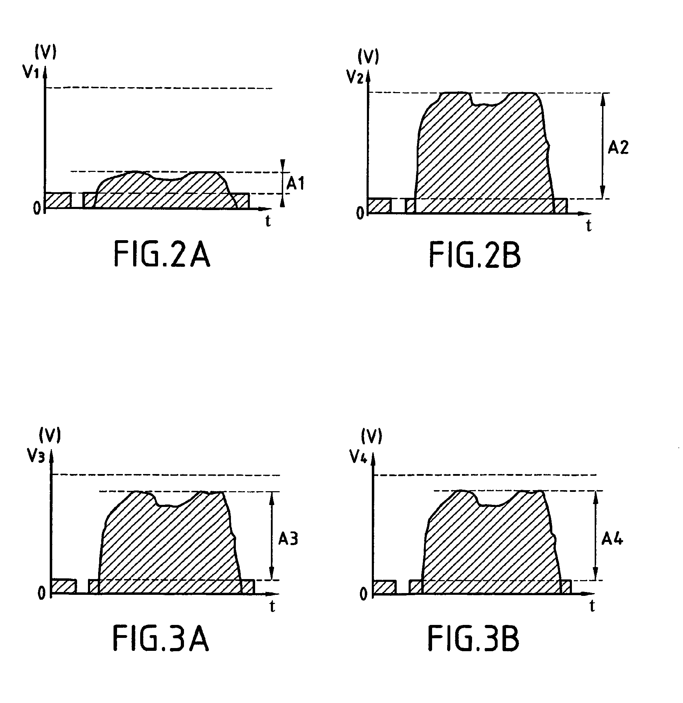

Un tel phénomène sera mieux compris en considération des schémas des **Figures 2a, 2b** et **3a****, 3b** qui illustrent des exemples de signaux vidéos générés par une caméra analogique **6** lors du passage d'un objet **2**. L'abscisse de chaque schéma représente le temps, tandis que l'ordonnée représente la tension de sortie générée par le capteur **6** en fonction de l'intensité du rayonnement reçu.

La **Figure 2a** représente la forme du signal de sortie **V₁** d'un capteur **6** correspondant au rayonnement infrarouge d'un objet **2** fabriqué par une cavité de formage **4** la plus éloignée du poste d'inspection **P**.

La **Figure 2b** représente la forme du signal de sortie **V₂** d'un capteur **6** correspondant au rayonnement infrarouge d'un objet **2** issu d'une cavité **4** la plus proche du poste de détection **P.**

L'amplitude **A₁** du signal de sortie **V₁** correspondant à la cavité **4** la plus éloignée est donc très faible par rapport à l'amplitude **A₂** du signal de sortie **V₂** correspondant à un objet issu d'une cavité la plus proche du poste de détection **P**. Il apparaît donc impossible avec la technique antérieure, d'obtenir une bonne dynamique et un bon rapport signal sur bruit pour l'ensemble des objets provenant des différentes cavités **4**.

Conformément à l'invention, il est prévu d'adapter lors de l'inspection des objets, l'exposition de chaque capteur **6** en fonction de l'évaluation du niveau du rayonnement infrarouge préalablement effectuée permettant d'uniformiser la réponse du capteur. Ainsi, tel que cela apparaît plus précisément aux **Figures 3a** et **3b****,** avec la correction selon l'invention, les amplitudes **A₃** et **A₄** des signaux de sortie **V₃, V₄** correspondant à des objets issus respectivement d'une cavité la plus éloignée et la plus proche sont sensiblement homogènes ou identiques. En d'autres termes, l'exposition de chaque capteur **6** est corrigée lors de l'étape d'inspection des objets **2**, selon un réglage adapté en fonction des cavités **4** d'où sont issus les objets inspectés. Les signaux de sortie de chaque capteur 6 peuvent présenter ainsi une amplitude homogène ou constante quelles que soient les cavités d'où sont issus les objets **2**.

Avantageusement, l'exposition de chaque capteur **6** est adaptée de manière que chaque capteur **6** pour l'inspection des objets, délivre des signaux de sortie présentant une amplitude maximum non saturée de manière à optimiser la dynamique et le rapport signal sur bruit du capteur.

Différentes méthodes sont possibles pour adapter l'exposition d'un capteur **6**. Par exemple, il peut être utilisé un système d'auto iris permettant de fermer automatiquement le diaphragme de l'objectif du capteur lorsqu'un niveau de lumière prédéterminé est atteint.

Une autre technique consiste à régler un gain différent dans la chaîne d'acquisition de mesure en fonction de chaque cavité **4**. Le gain correspondant à une cavité **4** est mémorisé et appliqué au passage de l'objet correspondant à la même cavité.

Une autre méthode est de régler le temps d'exposition du capteur par un obturateur mécanique ou électronique piloté.

Avantageusement, il est préférable d'utiliser une caméra avec un temps d'intégration réglable permettant de régler l'exposition de la caméra. Le temps d'intégration est le temps pendant lequel la surface sensible de la caméra est exposée à la lumière avant transfert de ses charges électriques. Ce temps est une fraction de la période ligne de la caméra. Une telle solution présente l'avantage d'avoir des réglages optiques identiques et le meilleur rapport signal sur bruit quels que soient les différents niveaux de rayonnement infrarouge des objets **2**.

Il est à noter que l'objet de l'invention permet de compenser en permanence les variations de la température moyenne des objets provoqués par des changements dans le procédé de formage ou par des éléments extérieurs sans dégrader le contrôle.

L'installation **1** selon un mode de réalisation préféré de l'invention permet de mettre en oeuvre un procédé d'inspection découlant directement de la description qui précède.

Le procédé qui sera décrit vise à effectuer une évaluation a posteriori du rayonnement infrarouge émis pour chaque objet **2**. Selon cette technique, l'unité **10** est synchronisée avec la machine de formage **3** de manière à connaître en permanence la provenance des objets **2** parmi les différentes cavités **4**. Le procédé consiste à mettre en oeuvre une phase d'étalonnage au cours de laquelle est évalué le niveau du rayonnement infrarouge partiel ou complet des objets **2** défilant devant le poste d'inspection **P**. Une telle évaluation est synchronisée avec l'origine de formation des objets dans les cavités de manière que pour chaque objet **2** passant devant le poste d'inspection **P**, la cavité **4** dont l'objet est issu est connue.

Ainsi, lors d'une étape ultérieure d'inspection des objets par le ou les capteurs, l'exposition de chaque capteur **6** est adaptée en fonction de l'évaluation du niveau du rayonnement infrarouge préalablement effectué au cours de la phase d'étalonnage en vue d'uniformiser la réponse du capteur quelle que soit la provenance des objets parmi les différentes cavités. L'exposition de chaque caméra **6** est ainsi corrigée avec un réglage qui tient compte pour chaque objet, de leur origine de formation, de façon à obtenir des signaux de sortie avec une amplitude constante sans saturation pour l'ensemble des objets. De cette façon, il est possible d'obtenir, comme expliqué ci-dessus, une image sans saturation avec une amplitude maximum et constante quelle que soit la cavité dont est issu l'objet. Il peut ainsi être obtenu un maximum de dynamique et le meilleur rapport signal sur bruit dans les images à analyser.

Dans l'exemple illustré, lors de la phase d'étalonnage, l'évaluation du niveau du rayonnement infrarouge des objets **2** est réalisée pour des objets servant de référence correspondant à au moins un premier cycle de formation des objets sortant des cavités **4** de formage. Dans l'exemple décrit où le capteur assure à la fois une évaluation du niveau du rayonnement et une inspection de l'objet, il est clair que pour les objets servant de référence, l'opération d'inspection ne peut pas être réalisée avec les mêmes performances. Bien entendu, il peut être envisagé que l'évaluation du rayonnement infrarouge lors d'une phase d'étalonnage corresponde à l'évaluation du rayonnement réalisé lors de l'étape d'inspection d'une série d'objets. De cette manière, il est possible de corriger l'exposition de chaque capteur **6** en fonction de l'origine de l'objet **2** par rapport à la cavité **4**, non pas simplement au démarrage d'un cycle de fabrication d'un lot d'objets, mais au cours d'un tel cycle, de manière à tenir compte des changements qui influent sur le niveau de radiation des objets **2** au poste d'inspection **P**.

L'unité **10** assure l'inspection ou le contrôle sur une image acquise de chaque objet par le ou les capteur(s) **6**, sans comparaison à un modèle prédéterminé compte tenu de l'homogénéité obtenue des images. Le contrôle ou l'inspection consiste en un traitement directe des images prises sur lesquelles les défauts sont recherchés. Les objets sont rejetés s'il est détecté des défauts selon des caractéristiques, par exemple de surface, de forme, de contraste ou d'intensité. Les réglages des seuils permettant de traiter ces défauts sont uniques quelle que soit la cavité d'origine de l'objet. De tels réglages uniques facilitent l'exploitation et permettent une excellente reproductibilité des réglages.

L'invention n'est pas limitée aux exemples décrits et représentés car diverses modifications peuvent y être apportées sans sortir de son cadre défini par les revendications annexées.

## Revendications

1. Procédé pour inspecter, à l'aide d'au moins un capteur (**6**) sensible au rayonnement infrarouge, des objets creux (**2**) transparents ou translucides à haute température sortant de différentes cavités de formage (**4**), le procédé comportant une étape d'évaluation, pour chaque cavité de formage (**4**), du niveau de rayonnement infrarouge émis par les objets (**2**), qui en sont issus, suivie d'une étape d'inspection des objets (**2**), **caractérisé en ce que** :
- l'étape d'évaluation du rayonnement infrarouge émis par les objets (**2**) permet de déterminer pour chaque cavité de formage (**4**), une exposition du capteur (**6**),
- lors de l'étape d'inspection, l'exposition du capteur (**6**) est adaptée à l'exposition déterminée pour chaque objet (**2**), en fonction de la cavité d'origine (**4**) de l'objet (**2**), de manière à uniformiser la réponse du capteur (**6**) quelle que soit la cavité (**4**) d'origine des objets (**2**).

2. Procédé selon la revendication 1, **caractérisé en ce qu'**il consiste à adapter l'exposition du capteur (**6**) de manière que le capteur (**6**) pour l'inspection des objets (**2**), délivre des signaux de sortie présentant une amplitude maximum non saturée.

3. Procédé selon la revendication 1, **caractérisé en ce qu'**il consiste à évaluer le niveau du rayonnement infrarouge par une détecteur autre que le capteur (**6**).

4. Procédé selon la revendication 1, **caractérisé en ce qu'**il consiste :
- à évaluer le niveau du rayonnement infrarouge par le capteur (**6**) lors d'une phase d'étalonnage au cours de laquelle cette évaluation est synchronisée avec l'origine de formation des objets (**1**) dans les cavités (**4**),
- et à adapter, pour l'inspection des objets (**2**) par le capteur (**6**), l'exposition du capteur (**6**) en fonction de l'évaluation du niveau du rayonnement infrarouge préalablement effectuée au cours de la phase d'étalonnage, cette correction étant synchronisée avec l'origine de formation des objets (**2**) dans les cavités (**4**).

5. Procédé selon la revendication 4, **caractérisé en ce que** lors de la phase d'étalonnage, l'évaluation du niveau du rayonnement infrarouge des objets (**2**) est réalisée pour des objets (**2**) servant de référence correspondant à au moins le premier cycle de formation des objets (**2**) sortant des cavités de formage (**4**).

6. Procédé selon la revendication **4**, **caractérisé en ce qu'**il consiste à évaluer le niveau du rayonnement infrarouge lors d'une phase d'étalonnage réalisée lors de l'étape d'inspection d'une série d'objets (**2**).

7. Procédé selon l'une des revendications 1 à 6, **caractérisé en ce qu'**il consiste à adapter l'exposition du capteur (**6**) en réglant son temps d'intégration.

8. Procédé selon l'une des revendications 1 à 6, **caractérisé en ce qu'**il consiste à adapter l'exposition du capteur (**6**) en réglant le temps d'exposition du capteur (**6**), le niveau de rayonnement acquis par le capteur (**6**) ou le gain des signaux délivrés par le capteur (**6**).

9. Installation (**1**) pour inspecter à chaud des objets creux (**2**) transparents ou translucides sortant de cavités de formage (**4**), l'installation (**1**) comportant :
- au moins un capteur (**6**) sensible au rayonnement infrarouge émis par les objets (**2**) défilant devant le capteur (**6**),
- et une unité (**10**) de contrôle et de traitement des signaux de sortie délivrés par le capteur (**6**), **caractérisée en ce qu'**elle comporte :
• des moyens d'évaluation du niveau du rayonnement infrarouge au moins partiel des objets (**2**) préalablement à leur inspection par le capteur (**6**),
• et des moyens d'adaptation de l'exposition du capteur (**6**) en fonction de l'évaluation du niveau du rayonnement infrarouge en vue d'uniformiser la réponse du capteur (**6**) lors de l'inspection des objets (**2**), quelle que soit la provenance des objets (**2**) issus des différentes cavités (**4**).

10. Installation (**1**) selon la revendication 9, **caractérisée en ce que** les moyens d'évaluation du niveau du rayonnement infrarouge des objets (**2**) sont réalisés à l'aide d'un capteur (**6**) ou des capteurs (**6**).

11. Installation (**1**) selon la revendication 9, **caractérisée en ce qu'**elle comporte un détecteur du rayonnement infrarouge situé en amont du capteur (**6**) en considération du sens de défilement des objets (**2**) et relié à l'unité de contrôle et de traitement (**10**).

12. Installation (**1**) selon la revendication 9, **caractérisée en ce que** les moyens d'adaptation de l'exposition du capteur (**6**) assurent au capteur (**6**), de délivrer des signaux de sortie présentant une amplitude maximum non saturée.

13. Installation (**1**) selon la revendication 9, **caractérisée en ce qu'**elle comporte en tant que moyens d'adaptation de l'exposition du capteur (**6**), des moyens de réglage du temps d'intégration du capteur (**6**).

14. Installation (**1**) selon la revendication 9, **caractérisée en ce qu'**elle comporte des moyens de synchronisation (**12**) entre l'unité de contrôle (**10**) du capteur (**6**) et la machine de formage (**3**) en vue de synchroniser la correction de l'exposition du capteur (**6**) devant lequel défilent les objets (**2**) en fonction de l'origine de formation desdits objets (**2**) dans les cavités (**4**).

15. Installation (**1**) selon l'une des revendications 9 à 14, **caractérisée en ce qu'**elle comporte au moins deux capteurs (**6**) sensibles au rayonnement infrarouge disposés de part et d'autre d'un convoyeur de déplacement (**5**) assurant le défilement des objets (**2**) devant les capteurs (**6**), chaque capteur (**6**) étant incliné, par rapport à la normale à la direction de défilement, d'un angle d'inclinaison inférieur ou égal à 45° et de préférence de l'ordre de 30°.

16. Installation (**1**) selon l'une des revendications 9 à 15, **caractérisée en ce qu'**elle comporte pour chaque capteur (**6**), une plaque (**7**) opaque au rayonnement infrarouge disposée de manière que l'objet (**2**) se trouve situé entre ladite plaque (**7**) et le champ de vision du capteur (**6**) en vue d'éviter la prise d'éclairages parasites par le capteur (**6**).

## Patentansprüche

1. Verfahren, um mit Hilfe wenigstens eines gegenüber Infrarotstrahlung empfindlichen Sensors (6) transparente oder durchscheinende hohle Gegenstände (2) mit hoher Temperatur, die aus unterschiedlichen Formungshohlräumen (4) herauskommen, zu prüfen, wobei das Verfahren für jeden Formungshohlraum (4) einen Schritt zur Ermittlung des Pegels der Infrarotstrahlung, die durch die hieraus stammenden Gegenstände (2) ausgesandt wird, umfasst, an den sich ein Schritt zur Prüfung der Gegenstände (2) anschließt, **dadurch gekennzeichnet, dass**:
- der Schritt zur Ermittlung der durch die Gegenstände (2) ausgesandten Infrarotstrahlung ermöglicht, für jeden Formungshohlraum (4) eine Belichtung des Sensors (6) zu bestimmen,
- während des Prüfschrittes die Belichtung des Sensors (6) an die für jeden Gegenstand (2) bestimmte Belichtung in Abhängigkeit von dem Ursprungshohlraum (4) des Gegenstandes (2) angepasst wird, um die Reaktion des Sensors (6) unabhängig von dem Ursprungshohlraum (4) der Gegenstände (2) zu vereinheitlichen.

2. Verfahren nach Anspruch 1, **dadurch gekennzeichnet, dass** es darin besteht, die Belichtung des Sensors (6) derart anzupassen, dass der Sensor (6) für die Prüfung der Gegenstände (2) Ausgangssignale liefert, die eine ungesättigte maximale Amplitude aufweisen.

3. Verfahren nach Anspruch 1, **dadurch gekennzeichnet, dass** es darin besteht, den Pegel der Infrarotstrahlung durch einen anderen Detektor als den Sensor (6) zu ermitteln.

4. Verfahren nach Anspruch 1, **dadurch gekennzeichnet, dass** es darin besteht:
- den Pegel der Infrarotstrahlung durch den Sensor (6) während einer Kalibrierphase zu ermitteln, im Laufe derer diese Ermittlung mit dem Ausgangspunkt der Bildung der Gegenstände (2) in den Hohlräumen (4) synchronisiert wird, und
- für die Prüfung der Gegenstände (2) durch den Sensor (6) die Belichtung des Sensors (6) in Abhängigkeit von der vorher im Laufe der Kalibrierphase durchgeführten Ermittlung des Pegels der Infrarotstrahlung anzupassen, wobei diese Korrektur mit dem Ausgangspunkt der Bildung der Gegenstände (2) in den Hohlräumen (4) synchronisiert wird.

5. Verfahren nach Anspruch 4, **dadurch gekennzeichnet, dass** während der Kalibrierphase die Ermittlung des Pegels der Infrarotstrahlung der Gegenstände (2) für als Referenz dienende Gegenstände (2), die wenigstens dem ersten Bildungszyklus der aus den Formungshohlräumen (4) kommenden Gegenstände (2) entsprechen, durchgeführt wird.

6. Verfahren nach Anspruch 4, **dadurch gekennzeichnet, dass** es darin besteht, den Pegel der Infrarotstrahlung während einer Kalibrierphase, die während des Schrittes zur Prüfung einer Reihe von Gegenständen (2) durchgeführt wird, zu ermitteln.

7. Verfahren nach einem der Ansprüche 1 bis 6, **dadurch gekennzeichnet, dass** es darin besteht, die Belichtung des Sensors (6) durch Einstellen seiner Integrationszeit anzupassen.

8. Verfahren nach einem der Ansprüche 1 bis 6, **dadurch gekennzeichnet, dass** es darin besteht, die Belichtung des Sensors (6) durch Einstellen der Belichtungszeit des Sensors (6), des durch den Sensor (6) erfassten Strahlungspegels oder der Verstärkung der durch den Sensor (6) gelieferten Signale anzupassen.

9. Anlage (1) zur Wärmeprüfung von aus Formungshohlräumen (4) kommenden transparenten oder durchscheinenden hohlen Gegenständen (2), wobei die Anlage (1) umfasst:
- wenigstens einen Sensor (6), der gegenüber der Infrarotstrahlung, die durch die an dem Sensor (6) vorbeilaufenden Gegenstände (2) ausgesandt wird, empfindlich ist, und
- eine Einheit (10) zur Steuerung und zur Verarbeitung der durch den Sensor (6) gelieferten Ausgangssignale, **dadurch gekennzeichnet, dass** sie umfasst:
• Mittel zur Ermittlung des Pegels der wenigstens teilweisen Infrarotstrahlung der Gegenstände (2) vor deren Prüfung durch den Sensor (6), und
• Mittel zur Anpassung der Belichtung des Sensors (6) in Abhängigkeit von der Ermittlung des Pegels der Infrarotstrahlung, um die Reaktion des Sensors (6) bei der Prüfung der Gegenstände (2) unabhängig von der Herkunft der aus den unterschiedlichen Hohlräumen (4) stammenden Gegenstände (2) zu vereinheitlichen.

10. Anlage (1) nach Anspruch 9, **dadurch gekennzeichnet, dass** die Mittel zur Ermittlung des Pegels der Infrarotstrahlung der Gegenstände (2) mit Hilfe eines Sensors (6) oder der Sensoren (6) ausgebildet sind.

11. Anlage (1) nach Anspruch 9, **dadurch gekennzeichnet, dass** sie einen Detektor für die Infrarotstrahlung umfasst, der unter Berücksichtigung der Laufrichtung der Gegenstände (2) vor dem Sensor (6) gelegen ist und mit der Steuer- und Verarbeitungseinheit (10) verbunden ist.

12. Anlage (1) nach Anspruch 9, **dadurch gekennzeichnet, dass** die Mittel zur Anpassung der Belichtung des Sensors (6) dem Sensor (6) gewährleisten, Ausgangssignale zu liefern, die eine ungesättigte maximale Amplitude aufweisen.

13. Anlage (1) nach Anspruch 9, **dadurch gekennzeichnet, dass** sie als Mittel zur Anpassung der Belichtung des Sensors (6) Mittel zur Einstellung der Integrationszeit des Sensors (6) umfasst.

14. Anlage (1) nach Anspruch 9, **dadurch gekennzeichnet, dass** sie Synchronisierungsmittel (12) zwischen der Steuereinheit (10) des Sensors (6) und der Formungsmaschine (3) umfasst, um die Korrektur der Belichtung des Sensors (6), an dem die Gegenstände (2) vorbeilaufen, in Abhängigkeit von dem Ausgangspunkt der Bildung der Gegenstände (2) in den Hohlräumen (4) zu synchronisieren.

15. Anlage (1) nach einem der Ansprüche 9 bis 14, **dadurch gekennzeichnet, dass** sie wenigstens zwei gegenüber Infrarotstrahlung empfindliche Sensoren (6) umfasst, die auf beiden Seiten eines Förderers (5), welcher das Vorbeilaufen der Gegenstände (2) an den Sensoren (6) sicherstellt, angeordnet sind, wobei jeder Sensor (6) gegenüber der Normalen zu der Laufrichtung um einen Neigungswinkel kleiner oder gleich 45° und vorzugsweise in der Größenordnung von 30° geneigt ist.

16. Anlage (1) nach einem der Ansprüche 9 bis 15, **dadurch gekennzeichnet, dass** sie für jeden Sensor (6) eine für die Infrarotstrahlung undurchdringliche Platte (7) umfasst, die derart angeordnet ist, dass der Gegenstand (2) zwischen der Platte (7) und dem Sichtfeld des Sensors (6) gelegen ist, um die Aufnahme von Störlichtern durch den Sensor (6) zu vermeiden.

## Claims

1. A method for inspecting, using at least one sensor (6) sensitive to infrared radiation, hollow, transparent or translucent objects (2) at high temperature coming from different forming cavities, the method including a step of evaluating, for each forming cavity (4), the level of infrared radiation emitted by the objects (2) coming therefrom, followed by a step of of inspecting the objects (2), **characterized in that**:
- the step of evaluating the level of infrared radiation emitted by the objects (2) allows determining for each forming cavity (4), an exposure of the sensor (6),
- during the inspection step, the exposure of the sensor (6) is adapted to the determined exposure for each object (2), as a function of the cavity of origin (4) of the object (2), in order to make the response of the sensor (6) uniform, whatever the cavity of origin of the objects (2).

2. A method according to claim 1, **characterized in that** it consists in adapting the exposure of the sensor (6) in such a manner that the sensor (6) for inspecting the objects (2) delivers output signals presenting a maximum amplitude that is not saturated.

3. A method according to claim 1, **characterized in that** it consists in evaluating the level of the infrared radiation by means of a detector other than the sensor (6).

4. A method according to claim 1, **characterized in that** it consists:
- in evaluating the infrared radiation level by means of the sensor (6) during a calibration stage during which said evaluation is synchronized with the originating cavities in which the objects (2) are formed; and
- in adapting, for the purpose of inspecting the objects (2) by that sensor (6) the exposure of the sensor (6) as a function of the infrared radiation level as previously evaluated during the calibration stage, this correction being synchronized with the originating cavities (4) in which the objects (2) are formed.

5. A method according to claim 4, wherein, during the calibration stage, the infrared radiation level of the objects (2) is evaluated for objects (2) that act as references corresponding to at least a first cycle of forming objects (2) coming from the forming cavities (4).

6. A method according to claim 4, consisting in evaluating the level of infrared radiation during a calibration stage that is performed during the step of inspecting a series of objects (2).

7. A method according to claim 1, consisting in adapting the exposure of the sensor (6) by adjusting its integration time.

8. A method according to claim 1, consisting in adapting the exposure of the sensor (6) by adjusting the exposure time of the sensor (6), the level of radiation acquired by the sensor (6), or the gain of signals delivered by the sensor (6).

9. An installation (1) for inspecting hollow, transparent or translucent objects (2) while hot on leaving forming cavities (4), the installation (1) comprising:
- at least one sensor (6) sensitive to the infrared radiation emitted by the objects (2) traveling past the sensor (6); and
- a unit (10) for controlling and processing the output signals delivered by the sensor (6), **characterized in that** it comprises:
- means for evaluating the infrared radiation level, at least in part, of objects (2) prior to inspecting the objects (2) by means of the sensor (6); and
- means for adapting the exposure of the sensor (6) as a function of the evaluated infrared radiation level in order to make the response of the sensor (6) uniform during inspection of the objects (2), regardless of origin of the objects (2) coming from the different cavities (4).

10. Installation (1) according to claim 9, **characterized in that** the means for evaluating the level of infrared radiation from the objects (2) are implemented by using a sensor or sensors (6).

11. Installation (1) according to claim 9, **characterized in that** it includes an infrared radiation detector situated upstream from the sensor (6) in the travel direction of the objects (2) and connected to the unit for controlling and processing.

12. Installation (1) according to claim 9, **characterized in that** the means for adjusting sensor (6) exposure ensure that the sensor (6) delivers output signals presenting a maximum amplitude that is not saturated.

13. Installation (1) according to claim 9, **characterized in that** it includes as means for adapting the exposure of the sensor (6), means for adjusting the integration time of the sensor (6).

14. Installation according to claim 9, **characterized in that** it includes synchronization means between the unit (10) for controlling the sensor (6) and the forming machine (3) in order to synchronize the correction of the exposure of the sensor (6) past which the objects (2) travel as a function of the originating cavities (4) in which said objects are formed.

15. Installation (1) according to one of claims 9 to 14, **characterized in that** it includes at least two sensors (6) sensitive to infrared radiation placed on either side of a conveyor (5) for moving the objects (2) past the sensors (6), each sensor being inclined relative to the normal to the travel direction at an angle of inclination that is less than or equal to 45°, and that is preferably about 30°.

16. Installation (1) according to one of claims 9 to 15, **characterized in that** it includes, for each sensor (6), a plate (7) that is opaque to infrared radiation and that is disposed in such a manner that the object (2) lies between said plate (7) and the field of view of the sensor (6) so as to avoid the sensor (6) picking up parasitic illumination.
